# EUROPÄISCHE PATENTANMELDUNG

(11) **EP 4 606 769 A1**
(43) Veröffentlichungstag der Anmeldung: **27.08.2025**
(21) Anmeldenummer: 24020061.8
(22) Anmeldetag: 20.02.2024
(51) Int. Cl.: C01C 1/04, C07C 29/151

(54) **VERFAHREN UND ANLAGE ZUR HERSTELLUNG EINES VERFAHRENSPRODUKTS**

(71) Anmelder: Linde GmbH, 82049 Pullach (DE)
(72) Erfinder: Reinke, Michael, 82049 Pullach (DE); Müller-Thorwart, Ole, 82049 Pullach (DE); Peschel, Andreas, 82049 Pullach (DE); Haselsteiner, Thomas, 82049 Pullach (DE); Theodor von Trotha, Thilo Frank, 82049 Pullach (DE)
(74) Vertreter: Fischer, Werner

(57) **Zusammenfassung**

Die Erfindung betrifft ein Verfahren sowie eine Anlage zur Herstellung eines Verfahrensprodukts bei dem ein Eduktgemisch (1) einem Reaktor (20) zugeführt und in dem Reaktor (20) in einer exothermen Reaktion mit einer Aktivierungsenergie zu einem Rohgas (3) umgesetzt wird, wobei das Verfahren einen Anfahrbetrieb (210) umfasst, in dem eine Bereitstellung zumindest eines Teils der Aktivierungsenergie unter Verwendung eines Anfahrheizer (10) vorgenommen wird, und einen normalen, nach dem Anfahrbetrieb (210) durchgeführten Produktionsbetrieb (220) umfasst, wobei im Produktionsbetrieb (220) eine Bereitstellung zumindest eines Teil der Aktivierungsenergie unter Verwendung von Wärmeenergie vorgenommen wird, die bei der exothermen Reaktion erzeugt wird. Kennzeichnend hierbei ist, dass der für den Anfahrbetrieb bereitgestellte Anfahrheizer (10) als Wärmepuffer mit einem Wärmespeichermedium ausgeführt ist.

## Beschreibung

Die vorliegende Erfindung betrifft ein Verfahren und eine Anlage zur Herstellung eines Verfahrensprodukts, insbesondere von Ammoniak, gemäß den Oberbegriffen der unabhängigen Patentansprüche.

### Hintergrund

Um Treibhausgasemissionen und die Abhängigkeit von fossilen Brennstoffen langfristig zu verringern, können für die Produktion von Energie und unterschiedlicher Chemikalien vorteilhafterweise erneuerbare Energiequellen genutzt werden.

Im Gegensatz zu konventionellen bzw. fossilen Energieträgern wie Erdgas, flüssigen Kohlenwasserstoffen und Kohle, unterliegen erneuerbare Energiequellen wie Sonne und Wind bekanntermaßen stündlichen, täglichen und saisonalen Schwankungen in ihrer Verfügbarkeit. Daher müssen verfahrenstechnische Prozesse, die mit derartigen erneuerbaren Energiequellen betrieben werden, diesen Schwankungen bis zu einem gewissen Grad folgen können oder über umfangreiche Mittel zur Energiespeicherung, beispielsweise in Form von elektrochemischen Speichern oder Wasserstoffspeichern, verfügen. Generell gilt, dass je flexibler ein entsprechender Prozess ist, desto weniger Speicherung erforderlich ist, was die wirtschaftliche Leistung des Prozesses verbessern kann.

Wenngleich die vorliegende Erfindung nachfolgend überwiegend unter Bezugnahme auf die Ammoniaksynthese erläutert wird, eignen sich ihre Ausgestaltungen auch für andere Verfahren und Anlagen zur Herstellung von Verfahrensprodukten, bei denen vergleichbare Probleme auftreten.

Es besteht der Bedarf nach Verbesserungen in entsprechenden Verfahren und Anlagen, insbesondere hinsichtlich eines flexibleren Betriebs unter Verwendung von fluktuierend zur Verfügung stehenden Energiequellen.

### Offenbarung der Erfindung

Vor diesem Hintergrund werden ein Verfahren und eine Anlage mit den jeweiligen Merkmalen der unabhängigen Patentansprüche vorgeschlagen. Ausgestaltungen sind Gegenstand der abhängigen Ansprüche und der nachfolgenden Beschreibung.

Das vorgeschlagene Verfahren dient zur Herstellung eines Verfahrensprodukts bei dem einem Eduktgemisch Aktivierungsenergie zugeführt wird, um es in einem Reaktor in einer exothermen Reaktion zu einem Rohgas umzusetzen, wobei das Verfahren einen Anfahrbetrieb, in dem zumindest ein Teil der Aktivierungsenergie dem Eduktgemisch in Form von Wärme unter Verwendung eines Anfahrheizers zugeführt wird, und einen normalen, im Anschluss an der Anfahrbetrieb durchgeführten Produktionsbetrieb umfasst, während dem bei der exothermen Reaktion freigesetzte Wärme zur Bereitstellung von zumindest einem Teil der Aktivierungsenergie genutzt wird. Bei dem Verfahrensprodukt kann es sich insbesondere um das vom Reaktor ausgegebene Rohgas handeln oder um einen durch weitere Aufbereitungsschritte aus dem Rohgas erhaltenen Produktstrom.

Wie erwähnt, kann das Verfahren im Zuge der Herstellung von Ammoniak eingesetzt werden, ist hierauf aber nicht beschränkt. Die nachfolgenden Erläuterungen dienen daher in erster Linie der Veranschaulichung.

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es praktisch ausschließlich nach dem Haber-Bosch-Verfahren aus Stickstoff und Wasserstoff synthetisiert.

Beim Haber-Bosch-Verfahren wird im Produktionsbetrieb ein vorwiegend aus Wasserstoff und Stickstoff bestehendes, als Ammoniaksynthesegas bezeichnetes Eduktgemisch, in dem die beiden Stoffe in dem für die Synthese von Ammoniak stöchiometrischen Verhältnis von 3:1 vorliegen, mit einem Druck zwischen 80 und 300 bar und einer Temperatur zwischen 300 und 450°C einem Ammoniakreaktor zugeführt, um mit katalytischer Unterstützung in einer exothermen Reaktion unter Bildung von Ammoniak umgesetzt zu werden. Aufgrund thermodynamischer Limitierungen erfolgt die Umsetzung allerdings nur unvollständig, so dass ein Rohgas entsteht, das neben Ammoniak auch erhebliche Wasserstoff- und Stickstoffanteile enthält. Mit einer Temperatur zwischen 400 und 450°C verlässt das Rohgas den Ammoniakreaktor und wird nachfolgend in einer Reihe von Wärmetauschern abgekühlt, um Ammoniak durch Kondensation abzuscheiden und ein weitgehend aus Wasserstoff und Stickstoff bestehendes, Reste nicht auskondensierten Ammoniaks enthaltendes Recyclegas zu erhalten, das zur Erhöhung der Ammoniakausbeute in einem Synthesekreislauf zum Ammoniakreaktor zurückgeführt und dabei mit einem Wasserstoff und Stickstoff umfassenden Make-up-Gas zum Ammoniaksynthesegas gemischt wird.

Üblicherweise sind Ammoniakreaktoren als autotherm betreibbare Mehrbettrektoren ausgeführt, die wenigstens zwei strömungstechnisch miteinander verbundene Katalysatorbetten umfassen, die seriell von Ammoniaksynthesegas, das dabei schrittweise zum Syntheseprodukt umgesetzt wird, durchströmt werden können. Nach dem ersten und vor jedem weiteren Katalysatorbett ist jeweils eine Kühleinrichtung angeordnet, über die Reaktionswärme aus dem durch Umsetzung im vorgeschalteten Katalysatorbett erhaltenen Gasgemisch abgeführt wird, um es abgekühlt zur weiteren Umsetzung in das nachgeschaltete Katalysatorbett weiterzuführen. Als Kühlmittel bei einer derartigen Zwischenkühlung dient anzuwärmendes nicht umgesetztes Ammoniaksynthesegas.

Anlagen zur Ammoniakherstellung laufen in der Regel lange Zeit im Dauerbetrieb in der Nähe ihres optimalen Betriebspunkts. Dennoch werden für die wenigen Anfahrvorgänge, die während der Lebensdauer einer entsprechenden Anlage durchgeführt werden, spezielle Apparate in Form der genannten Anfahrheizer installiert. Beispielsweise wird in der US 2011/123404 A1 die Verwendung eines elektrischen, im Druckmantel eines Ammoniakreaktors angeordneten Anfahrheizers vorgeschlagen.

Die Ammoniaksynthesereaktion, bei der Stickstoff und Wasserstoff in Gegenwart eines Katalysators miteinander reagieren, ist exotherm und selbsterhaltend. Die Reaktion kann jedoch nur bei höheren Temperaturen anlaufen. Beim Anfahren einer Ammoniakanlage aus dem kalten Zustand muss daher der Ammoniakreaktor mit seinen Katalysatorbetten über den Anfahrheizer vorgeheizt werden. Bei jedem Anfahren oder Wiederaufheizen ist der Anfahrheizer für einen längeren Zeitraum in Betrieb. Während des normalen Produktionsbetriebs wird er in herkömmlichen Verfahren abgeschaltet. Am häufigsten werden direkt befeuerte Anfahrheizer eingesetzt; es werden aber auch elektrische betriebene Anfahrheizer verwendet.

Der für die Bildung des Make-up-Gases benötigte Wasserstoff wird heute noch überwiegend aus Kohlenwasserstoffen gewonnen, die hierbei unter Bildung von Kohlendioxid zu einem wasserstoffreichen Synthesegas reformiert werden. Das klimaschädliche Kohlendioxid wird aus dem Synthesegas abgetrennt und entweder in die Atmosphäre freigesetzt oder mit großem finanziellem und apparativem Aufwand durch Sequestrierung entsorgt.

Um diese Nachteile zu überwinden, werden in letzter Zeit verstärkt Anstrengungen unternommen, Wasserstoff kohlendioxidfrei beispielsweise durch elektrochemische Zerlegung von Wasser unter Verwendung eines Elektrolyseurs zu gewinnen und zur Bildung des Make-up-Gases einzusetzen. Der insgesamt für die Ammoniakerzeugung benötigte elektrische Strom wird dabei direkt aus regenerativen Quellen wie Wind- oder Solarkraftwerken, oder als Überschussstrom aus dem öffentlichen Netz bezogen, weshalb er nicht mit konstanter Leistung zur Verfügung steht. Da sich der Betrieb des Elektrolyseurs und eines evtl. zur Stickstofferzeugung eingesetzten Luftzerlegers relativ einfach und schnell an variable Betriebsbedingungen anpassen lässt und die Produktionsmengen von Wasserstoff und Stickstoff in erster Näherung proportional zur elektrischen Leistung sind, variieren die Mengenströme des im Elektrolyseur produzierten Wasserstoffs und des im Luftzerleger erzeugten Stickstoffs mit der Menge des verfügbaren elektrischen Stroms. Entsprechend erreicht der Mengenstrom des Make-up-Gases häufig und über längere Zeiträume weniger als die Hälfte des Wertes, der für einen Vollastbetrieb des Ammoniakreaktors erforderlich ist.

Anders als die zur Erzeugung des Make-up-Gases eingesetzten Vorrichtungen, kann der Ammoniakreaktor nur langsam und in engen Grenzen seinen Betriebszustand ändern. Eine Reduzierung der zugeführten Menge an Make-up-Gas führt zu einer Reduzierung der im Synthesekreislauf umlaufenden Ammoniaksynthesegasmenge, was neben einer Verminderung des Reaktordrucks auch einen erhöhten Wärmeverlust zur Folge hat. Unterschreitet die zuführbare Menge an Ammoniaksynthesegas einen Mindestwert, der gewöhnlich bei 30% des Wertes bei Volllastbetrieb liegt, wird die Produktion unterbrochen und der Ammoniakreaktor abgeschaltet, da aufgrund der Wärmverluste die Synthesereaktion nicht mehr aufrechterhalten werden kann. Das Abschalten und anschließende Wiederanfahren ist mit hohen Kosten verbunden, da hierdurch nicht nur die Produktion unterbrochen wird, sondern auch den Reaktor sowie die mit ihm verbundenen Anlagenteile mechanisch übermäßige stark beansprucht werden. Darüber hinaus ist insbesondere für das Wiederanfahren ein erheblicher Energieeinsatz erforderlich.

Die hier vorgeschlagene Lösung umfasst nun, dass der für den Anfahrbetrieb bereitgestellte Anfahrheizer als Wärmepuffer mit einem Wärmespeichermedium ausgeführt ist, das im normalen Produktionsbetrieb anfallende Wärme speichert, um sie im Anfahr- oder Teillastbetrieb abzugeben. Vorzugsweise handelt es sich bei dem Wärmespeichermedium um ein Thermoöl oder eine Salzschmelze oder einen Festkörper.

Die Erfindung ermöglicht es, der begrenzten Lastflexibilität von konventionellen, auf einem Haber-Bosch-Kreislauf basierenden Ammoniakanlagen oder auch von Anlagen zur Erzeugung anderer Verfahrensprodukte zu begegnen, da durch den als Wärmepuffer ausgeführten Anfahrheizer der eingesetzte Reaktor schnell auf Betriebstemperatur gebracht oder die benötigte Zusatzwärme im Teillastbetrieb auch in Zeiten teurer erneuerbarer Energie kostengünstig zur Verfügung gestellt werden kann.

In einer Ausführungsform, in der der Anfahrheizer als Wärmespeichermedium einen Festkörper aufweist, ist erfindungsgemäß vorgesehen, dass der Festkörperspeicher strömungstechnisch mit einem weitern, als Thermoöl-Bad ausgeführten Wärmespeicher oder mit einem elektrischen Heizer verbunden ist. Auf diese Weise ist es möglich, das im Reaktor eingesetzte Eduktgemisch mit Hilfe des Anfahrheizers auf eine höhere Temperatur anzuwärmen, als es alleine unter Nutzung eines Festkörperspeichers möglich ist. Dem über den Festkörper vorgewärmten Eduktgemisch wird dabei über das Thermoöl-Bad oder den elektrischen Heizer weitere Wärme zugeführt, um beispielsweise die im Reaktor benötigte Aktivierungsenergie zu erreichen.

In einer Ausführungsform ist der Anfahrheizer mit einer elektrischen Heizung ausgeführt, so dass zur Beladung des Wärmespeichermediums auch regenerativ erzeugter elektrischer Strom genutzt werden kann.

In einer Ausführungsform wird das Rohgas, insbesondere während des Produktionsbetriebs - insbesondere bei hoher Last - unter Erhalt eines abgekühlten Rohgases einer Wärmeintegration unterworfen und die in der Wärmeintegration erhaltene Wärme oder ein Teil hiervon im Anfahrheizer gespeichert. Dadurch kann die im Reaktor entstandene Wärme effektiv im Verfahren weiterverwendet werden, wodurch die Effizienz des Verfahrens steigt.

Insbesondere kann die Wärmeintegration mit einem elektrischen Heizer kombiniert werden, wobei die Wärmeintegration dazu genutzt wird den Anfahrheizer bei hoher Last im Produktionsbetrieb bis zu einem gewissen Temperaturniveau durch Auskopplung der Wärme aus dem Rohgas zu beladen und die so gespeicherte Wärme im Teillastbetrieb wieder abzugeben. Der elektrische Heizer wird dabei zur Bereitstellung einer Spitzentemperatur verwendet, d.h. zur Erwärmung des Eduktgemischs über die unter Nutzung des oder der Wärmespeichermedien erreichbare Temperatur hinaus.

Der Betrieb des Anfahrheizers kann in Ausgestaltungen insbesondere auf Grundlage einer oder mehrerer in dem Verfahren erfasster Betriebsparameter vorgenommen werden. Auf diese Weise kann eine adaptive Anpassung der Leistung des Anfahrheizers erfolgen. Ein entsprechender, in dem Verfahren erfasste Betriebsparameter kann ein Druck im Synthesekreislauf, beispielsweise vor oder hinter dem Ammoniakcracker, sein, so dass einem Druckabfall zeitnah entgegengewirkt werden kann. Zusätzlich kann es in Ausgestaltungen der Erfindung vorgesehen und vorteilhaft sein, einen oder mehrere Temperaturwerte innerhalb des Reaktors zu erfassen, wobei insbesondere die Temperatur des Austrittsstrom in das letzte und die Temperatur des Eintrittsstroms in das erste Katalysatorbett aussagekräftig sind.

In einer Ausführungsform wird während des Produktionsbetriebs eine Lastreduktion vorgenommen, d.h. eine Verringerung der pro Zeiteinheit im Reaktor produzierten Rohgasmenge, wobei zumindest ein Teil der Aktivierungsenergie unter Verwendung des Anfahrheizers bereitgestellt wird. Durch den Anfahrheizer kann die Reaktoreintrittstemperatur des Eduktgemischs im niedrigen Lastbereich über die Reaktoreintrittstemperatur im hohen Lastbereich erhöht werden. Bei der Lastreduktion herrscht im Reaktor aufgrund der geringeren Umsetzung des Eduktgemischs eine niedrigere Temperatur. Durch das Beheizen des Eduktgemischs auf eine Reaktoreintrittstemperatur, die höher liegt als die Reaktoreintrittstemperatur bei hoher Last, kann die Reaktion im Reaktor auch bei Lastreduktion effizient ablaufen, da die für die Reaktion notwendige Aktivierungsenergie bereits mit dem Eduktgemisch zugeführt wird. Besonders vorteilhaft, weil energieeffizient, ist es dabei, wenn der Anfahrheizer in einem vorangegangenen Produktionsbetrieb mit Wärme des im Reaktor erhaltenen Rohgases beladen wird und die notwendige Spitzentemperatur während der Lastreduktion mittels regenerativ erzeugter elektrischer Energie durch einen elektrischen Heizer bereitgestellt wird.

Beispielsweise kann während des Produktionsbetriebs eine Last von einem ersten Betriebspunkt auf einen zweiten Betriebspunkt gesenkt werden. Bei Verwendung eines Reaktors mit mehreren Katalysatorbetten wird dabei die Vorlauftemperatur zumindest des in Strömungsrichtung des Eduktgemischs letzten Katalysatorbetts erhöht. In Ausgestaltungen kann auch vorgesehen sein, die Vorlauftemperaturen aller Katalysatorbetten stromab eines bestimmten Zwischenkühlers während des Lastwechsels zu erhöhen. Diese Temperaturerhöhung wird zumindest teilweise durch den Einsatz des Anfahrheizers erreicht. Der Reaktor kann also in entsprechenden Ausgestaltungen mehrere seriell angeordnete Katalysatorbetten aufweisen, wobei während einer Lastreduktion stromab eines oder mehrerer dieser Katalysatorbetten eine Wärmeübertragung durchgeführt wird.

Eine Möglichkeit, die Austrittstemperatur des letzten Katalysatorbetts zu erhöhen, besteht darin, die Zwischenkühlung zu verringern. In einem Extremfall wird auf die Zwischenkühlung ganz verzichtet, so dass die vorhandenen Katalysatorbetten wie ein einziges Katalysatorbett wirken.

Beim Herunterfahren der Einspeisung in den Ammoniaksynthesekreislauf kommt es in entsprechenden Reaktoren zu einer erheblichen Absenkung des Druckes, der durch eine Änderung des Reaktortemperatur begegnet werden kann. Wenn die Reaktortemperatur erhöht wird, lässt das Reaktionsgleichgewicht eine geringere Ammoniakproduktion zu, so dass weniger Material in Form von flüssigem Produkt aus dem Synthesekreislauf ausgetragen wird und daher eine geringere Druckabsenkung stattfindet. Allerdings läuft der Prozess der Erhöhung der Reaktortemperatur vergleichsweise langsam, so dass bei schnellen Abfahrvorgängen der Druck im Synthesekreislauf vorübergehend unter einen bestimmten, für den Normalbetrieb festgelegten Mindestwert fallen kann. Entsprechendes gilt auch für andere Verfahren unter Verwendung exothermer Reaktionen.

Die im Rahmen von Ausgestaltungen der vorliegenden Erfindung vorgeschlagenen Maßnahmen ermöglichen dagegen deutlich schnellere Lastwechsel.

In einer Ausführungsform ist eine Bereitstellung zumindest einer Komponente des Eduktgemischs, im Fall einer Ammoniaksynthese insbesondere Wasserstoff, unter Verwendung von regenerativ erzeugter elektrischer Energie aus einem Inselnetz vorgesehen, in dem eine Energieerzeugungseinheit zur Bereitstellung der regenerativ erzeugten elektrische Energie bereitgestellt ist. Die Lastreduktion kann dann vorgenommen werden, wenn die regenerativ erzeugte elektrische Energie abnimmt bzw. unter einen vorgegebenen Schwellwert sinkt. Der Begriff "Inselnetz" bezeichnet dabei ein elektrisches Netz, das nicht an ein überregionales, transnationales oder transkontinentales Stromnetz angeschlossen ist, so dass stets nur der mit der Energieerzeugungseinheit, beispielsweise umfassend eine oder mehrere Photovoltaik- oder Windkraftanlagen, bereitgestellten elektrischen Energie auskommen muss. Ein Inselnetz muss neben den genannten Komponenten nicht notwendigerweise weitere Komponenten aufweisen.

In einer weiteren Ausführungsform erfolgt eine Bereitstellung zumindest einer Komponente des Eduktgemischs unter Verwendung von elektrischer Energie aus einem Fernnetz, wobei die Lastreduktion dann vorgenommen wird, wenn eine Verfügbarkeit der elektrischen Energie abnimmt und/oder ein Preis der elektrischen Energie über einen vorgegebenen Schwellwert steigt. Dabei kann die Verfügbarkeit der elektrischen Energie abnehmen, weil der Netzbetreiber die maximal verfügbare Menge aus dem Fernnetz beschränkt, beispielsweise weil aufgrund der Wetterbedingungen und/oder der Tageszeit die Menge an regenerativ erzeugter Energie die in das Fernnetz eingespeist wird abnimmt. Die Verfügbarkeit von elektrischer Energie kann weiterhin abnehmen, wenn der Verbrauch von elektrischer Energie an anderer Stelle, beispielsweise in einer anderen Industrieanlage, stark zunimmt und daher für das Verfahren bzw. die das Verfahren durchführende Anlage weniger Energie zur Verfügung steht. Das "Fernnetz" kann insbesondere ein überregionales, transnationales oder transkontinentales Stromnetz sein, das eine Vielzahl von Energieerzeugungseinrichtungen, insbesondere unterschiedlicher Art, und eine Vielzahl von Verbrauchern, bspw. Industrieanlagen, Wohnhäuser, Bürogebäude, Elektromobilitätseinrichtungen usw. umfassen kann.

In einer Ausführungsform umfasst die Bereitstellung zumindest eines Teils der Aktivierungsenergie in dem Produktionsbetrieb eine einstellbare Wärmeübertragung von einem oder mehreren, unter Verwendung des Reaktors gebildeten Stoffströmen auf das Eduktgemisch und/oder auf einen oder mehrere Teilströme des Eduktgemischs.

In einer Ausführungsform umfasst die Bereitstellung zumindest eines Teils der Aktivierungsenergie in dem Anfahrbetrieb und bei den anderen Betriebsphasen des Anfahrheizers eine einstellbare Beheizung des Eduktgemischs und/oder eines oder mehrerer Teilströme des Eduktgemischs. Der Anfahrheizer kann mit vorgewärmtem oder frischem Einsatzmaterial beschickt werden.

Im Rahmen von Ausführungsformen werden ein oder mehrere weitere einstellbare Betriebsparameter des Verfahrens während der Lastreduktion verändert. Der eine oder die mehreren Betriebsparameter kann bzw. können insbesondere die Drehzahl eines Kreislaufverdichters und/oder ein Betriebsparameter eines parallel zu dem Kreislaufverdichter angeordneten Ventils oder einer anderen Sperreinrichtung sein oder einen solchen Parameter umfassen. Die Erfindung kann also mit anderen fortschrittlichen Regelungsmethoden kombiniert werden, die in herkömmlichen Haber-Bosch-Kreisläufen nicht vorhanden sind.

Beispielsweise kann der Druck innerhalb von Grenzen geregelt werden, indem die Geschwindigkeit des Kreislaufverdichters im Haber-Bosch-Kreislauf oder die Öffnung eines Ventils, das parallel zum Kreislaufkompressor angeordnet ist, eingestellt wird. Dies allein ermöglicht es jedoch nicht unbedingt, den Druck innerhalb des zulässigen Bereichs zu halten, ohne andere betriebliche Zwänge zu verletzen. Entsprechende Maßnahmen können jedoch nützlich sein für eine Feineinstellung des Drucks in der Nähe des gewünschten Betriebspunkts.

Ausgestaltungen des vorgeschlagenen Verfahrens können zur Herstellung von Ammoniak, Methan oder Methanol als Verfahrensprodukt verwendet werden.

Das oben dargestellte Reaktorsystem ist beispielhaft und das Grundkonzept der Erfindung kann auf andere Reaktortypen übertragen werden. Die Erfindung kann also neben der Ammoniaksynthese auch in anderen chemischen Prozessen eingesetzt werden, bei denen eine gleichgewichtsbegrenzte exotherme Reaktion abläuft. Dazu gehören zum Beispiel die Methanol- und Methansynthese.

Die vorgeschlagene Anlage zur Herstellung eines Verfahrensprodukts weist einen Reaktor und einem Anfahrheizer auf und ist dafür eingerichtet, ein Eduktgemisch dem Reaktor zuzuführen und in dem Reaktor in einer exothermen Reaktion mit einer Aktivierungsenergie umzusetzen, einen Anfahrbetrieb durchzuführen, in dem eine Bereitstellung zumindest eines Teils der Aktivierungsenergie unter Verwendung eines oder mehrerer Anfahrheizers vorgenommen wird, und nach dem Anfahrbetrieb einen Produktionsbetrieb durchzuführen, in dem eine Bereitstellung zumindest eines Teil der Aktivierungsenergie unter Verwendung von Wärmeenergie vorgenommen wird, die bei der exothermen Reaktion erzeugt wird. Dabei ist vorgesehen, dass der eine oder die mehreren Anfahrheizer Wärmepuffer sind.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 ein schematisches Grundkonzept einer Anlage zur Herstellung von Ammoniak veranschaulicht,
Figur 2 eine Anlage zur Herstellung von Ammoniak mit weiteren Details veranschaulicht, und
Figur 3 ein Verfahren gemäß einer Ausgestaltung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorliegende Erfindung und Ausgestaltungen hiervon werden nachfolgend unter Bezugnahme auf eine Ammoniaksynthese erläutert. Wie mehrfach angesprochen, ist die Erfindung jedoch nicht hierauf beschränkt.

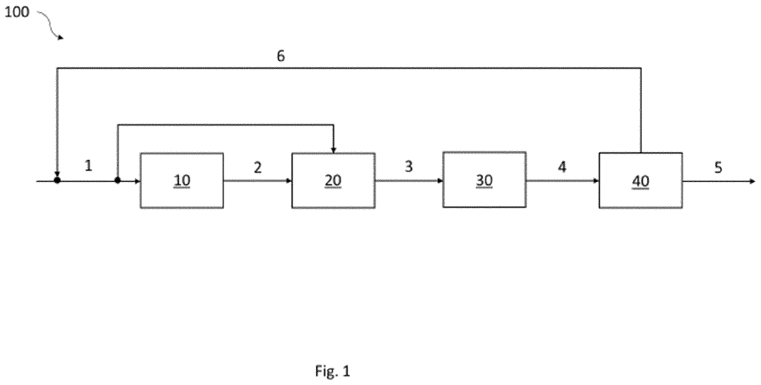

In Figur 1 ist schematisch ein Grundkonzept einer Anlage zur Herstellung von Ammoniak dargestellt, die einer Ausgestaltung der Erfindung zugrunde liegen kann, und insgesamt mit 100 bezeichnet ist.

Die Anlage 100 umfasst einen Anfahrheizer 10, einen Reaktor 20, eine Wärmeintegration 30 und eine Aufbereitungsvorrichtung 40. Der Reaktor 20 ist für den Betrieb mit geringer Teillast geeignet.

Dem Anfahrheizer 10 wird ein Eduktgemisch 1 bzw. ein Teil davon zugeführt, während der verbleibende Teil direkt dem Reaktor 20 zugeführt wird. In dem Anfahrheizer 10 wird das Eduktgemisch 1 erwärmt und anschließend dem Reaktor 20 als erwärmtes Eduktgemisch 2 zugeführt. Bei dem Anfahrheizer 10 handelt es sich erfindungsgemäß um einen Wärmepuffer, wie beispielsweise ein Thermo-Öl-Bad, ein Salzschmelze-Bad und/oder ein fester Wärmepuffer.

In dem Reaktor 20 wird das erwärmte Eduktgemisch 2 umgesetzt, als Rohgas 3 aus dem Reaktor 20 abgeführt und, unter Erhalt eines abgekühlten Rohgases 4, einer Wärmeintegration 30 unterworfen. Das abgekühlte Rohgas 4 wird anschließend einer Aufbereitungsvorrichtung 40 zugeführt, in der das abgekühlte Rohgas 4 in einen Produktstrom 5 und einen Restgasstrom 6 getrennt wird. Der Restgasstrom 6, der nicht umgesetzte Teile des Eduktgemischs 2 enthält, wird wiederum stromaufwärts des Anfahrheizers 10 mit einem Einsatzgemisch zum Eduktgemisch 1 gemischt.

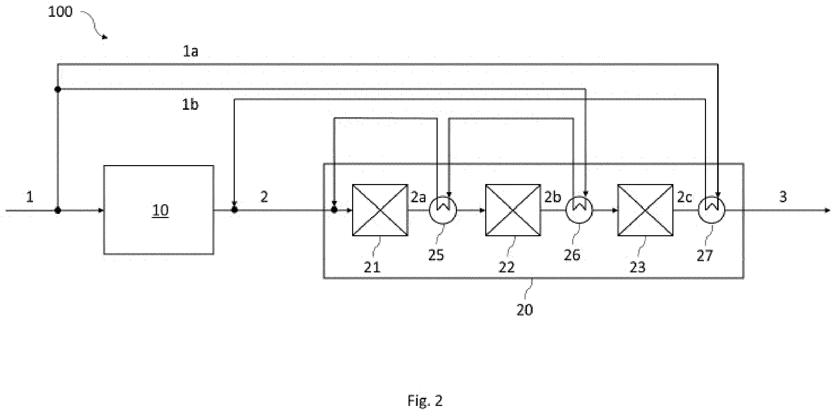

In Figur 2 ist eine Anlage zur Herstellung von Ammoniak mit weiteren Details des Reaktors dargestellt, die einer Ausgestaltung der Erfindung zugrunde liegen kann, und insgesamt mit 100 bezeichnet ist.

Der Reaktor 20 weist dabei ein erstes, zweites und drittes Reaktorbett 21, 22, 23 auf, die in Reihe miteinander verbunden sind und jeweils einen ersten, zweiten und dritten Stoffstrom 2a, 2b, 2c erzeugen. Zwischen den aufeinanderfolgenden Reaktorbetten 21, 22, 23 und sind ein erster und zweiter Zwischen- bzw. Nachkühler 25, 26 angeordnet und stromabwärts des dritten Reaktorbetts 23 ist ein dritter Zwischen- bzw. Nachkühler 27 angeordnet.

Von dem Eduktgemisch 1 werden ein erster Teilstrom 1a und ein zweiter Teilstrom 1b abgezweigt. Die Menge des Eduktgemischs 1 zum Anfahrheizer 10 kann beispielsweise über Ventile (nicht dargestellt) eingestellt werden. Der erste Teilstrom 1a wird dem dritten Nachkühler 27 zugeführt, durch einen Teil der Wärme des dritten Stoffstroms 2c erwärmt und anschließend mit dem erwärmten Eduktgemisch 2 gemischt. Der zweite Teilstrom 1b wird dem zweiten Nachkühler 26 zugeführt, durch einen Teil der Wärme des zweiten Stoffstroms 2b erwärmt, und von dort dem ersten Nachkühler 25 zugeführt und durch einen Teil der Wärme des ersten Stoffstroms 2a erwärmt. Anschließend wird der so erwärmte zweite Teilstrom 1b mit dem erwärmten Eduktgemisch 2, das bereits mit dem erwärmten ersten Teilstrom 1a gemischt ist, gemischt und dem ersten Reaktorbett 21 des Reaktors 20 zugeführt. Das erwärmte Eduktgemisch 2 durchläuft die drei Reaktorbetten 21, 22, 23 des Reaktors 20 und wird anschließend als Rohgas 3 aus dem Reaktor 20 ausgegeben, unter Erhalt des abgekühlten Rohgases 4 einer Wärmeintegration 30 (nicht gezeigt) und anschließend unter Erhalt des Produktstroms 5 und des Restgasstroms 6 einer Aufbereitungsvorrichtung 40 (nicht gezeigt) unterworfen.

Die Temperatur des Einsatzgemischs an der Stelle an der es, wieder zusammengefasst, dem ersten Katalysatorbett 21 zugeführt wird, richtet sich nach den Bedingungen in den Zwischen- bzw. Nachkühlern 25, 26, 27 und der entsprechenden Aufteilung auf diese und den Betrieb und die Speisung des Anfahrheizers 10.

Der Aufbau des Reaktors 20 ist hier nur beispielhaft angegeben. Andere Führungen des Eduktgemischs 1 sowie ein anderer Aufbau des Reaktors 20 sind weiterhin denkbar.

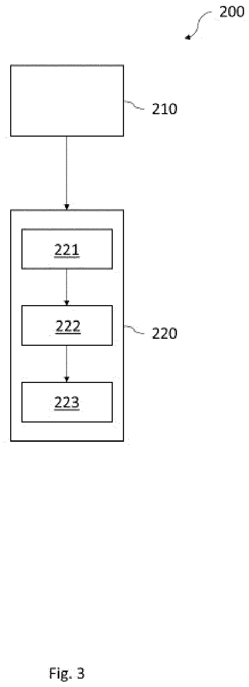

Figur 3 veranschaulicht ein Verfahren gemäß einer Ausgestaltung der Erfindung in vereinfachter Blockdarstellung, das insgesamt mit 200 bezeichnet ist. Die entsprechenden Verfahrensschritte werden nun nochmals unter Bezugnahme auf die Figuren 1 und 2 und die dort dargestellten Elemente erläutert.

In dem Verfahren 200 wird generell das Eduktgemisch 1, 2 dem Reaktor 20 zugeführt und in dem Reaktor 20 in einer exothermen Reaktion mit einer Aktivierungsenergie umgesetzt. Ein erster Verfahrensschritt bezeichnet einen Anfahrbetrieb 210, in dem eine Bereitstellung zumindest eines Teils der Aktivierungsenergie unter Verwendung des Anfahrheizers 10, der ein Wärmepuffer ist, vorgenommen wird.

Ist eine ausreichende Aufheizung erfolgt und die Umsetzung angelaufen, kann in einem nächsten Schritt ein Produktionsbetrieb 220 durchgeführt werden, in dem eine Bereitstellung zumindest eines Teils der Aktivierungsenergie unter Verwendung von Wärmeenergie vorgenommen wird, die bei der exothermen Reaktion entsteht.

In dem Produktionsbetrieb 220 kann in einem ersten Schritt 221 ein Betrieb bei einem ersten Lastpunkt erfolgen. Ein weiterer Schritt umfasst eine Lastreduktion 222, wobei, wie hier vorgeschlagen, in dieser eine Verringerung einer pro Zeiteinheit in dem Reaktor 20 gebildeten Menge des jeweiligen Rohgases 3, vorliegend Ammoniak, vorgenommen wird, bis in einem nächsten Schritt 223 ein zweiter, geringerer Lastpunkt erreicht ist. Während der Lastreduktion 222 kann insbesondere ein Betrieb des Anfahrheizers 10 vorgenommen werden, um einen übermäßigen Druckabfall zu verhindern.

## Patentansprüche

1. Verfahren (200) zur Herstellung eines Verfahrensprodukts bei dem ein Eduktgemisch (1) einem Reaktor (20) zugeführt und in dem Reaktor (20) in einer exothermen Reaktion mit einer Aktivierungsenergie zu einem Rohgas (3) umgesetzt wird, wobei das Verfahren einen Anfahrbetrieb (210) umfasst, in dem eine Bereitstellung zumindest eines Teils der Aktivierungsenergie unter Verwendung eines Anfahrheizer (10) vorgenommen wird, und einen normalen, nach dem Anfahrbetrieb (210) durchgeführten Produktionsbetrieb (220) umfasst, wobei im Produktionsbetrieb (220) eine Bereitstellung zumindest eines Teil der Aktivierungsenergie unter Verwendung von Wärmeenergie vorgenommen wird, die bei der exothermen Reaktion erzeugt wird,
**dadurch gekennzeichnet, dass** der für den Anfahrbetrieb bereitgestellte Anfahrheizer (10) als Wärmepuffer mit einem Wärmespeichermedium ausgeführt ist, das im normalen Produktionsbetrieb anfallende Wärme speichert, um sie im Anfahr- oder Teillastbetrieb abzugeben.

2. Verfahren (200) nach Anspruch 1, bei dem ein Thermo-Öl und/oder eine Salzschmelze und/oder ein Festkörper im Anfahrheizer (10) als Wärmespeichermedium eingesetzt wird.

3. Verfahren (200) nach Anspruch 2, bei der Anfahrheizer (10) neben einem Festkörperspeicher einen mit diesem strömungstechnisch verbundenen, als Thermoöl-Bad ausgeführten Wärmespeicher oder einen elektrischen Heizer umfasst.

4. Verfahren (200) nach einem der vorhergehenden Ansprüche, bei dem der Anfahrheizer (10) unter Verwendung von regenerativ erzeugter elektrischer Energie aus einem Inselnetz mit Wärme beladen erwärmt wird.

5. Verfahren (200) nach einem der vorhergehenden Ansprüche, bei dem das Rohgas (3), insbesondere während des Produktionsbetriebs (220) mit hoher Last, unter Erhalt eines abgekühlten Rohgases (4) einer Wärmeintegration (30) unterworfen und die in der Wärmeintegration (30) erhaltene Wärme oder ein Teil hiervon zur Beladung des Anfahrheizers (10) verwendet wird.

6. Verfahren (200) nach einem der vorstehenden Ansprüche, bei dem der Betrieb des Anfahrheizers (10) auf Grundlage einer oder mehrerer, in dem Verfahren (200) erfasster Parameter vorgenommen wird, wobei insbesondere zumindest ein in dem Verfahren (200) erfasster Parameter ein Druck oder eine Temperatur des Reaktors (20) ist.

7. Verfahren (200) nach einem der vorhergehenden Ansprüche, bei dem während des Produktionsbetriebs (220) eine Lastreduktion (222) vorgenommen wird, d.h. eine Verringerung der pro Zeiteinheit im Reaktor (20) produzierten Menge des Rohgases (3), wobei zumindest ein Teil der Aktivierungsenergie unter Verwendung des Anfahrheizers (10) bereitgestellt wird.

8. Verfahren (200) nach Anspruch 7, bei dem die Bereitstellung zumindest einer Komponente des Eduktgemischs (1) die Verwendung von regenerativ erzeugter elektrischer Energie aus einem Inselnetz umfasst, in dem eine Energieerzeugungseinheit zur Bereitstellung der regenerativ erzeugten elektrischen Energie bereitgestellt ist, wobei die Lastreduktion (222) dann vorgenommen wird, wenn die regenerativ erzeugte elektrische Energie abnimmt.

9. Verfahren (200) nach Anspruch 7 oder 8, bei dem die Bereitstellung zumindest einer Komponente des Eduktgemischs (1) die Verwendung von elektrischer Energie aus einem Fernnetz umfasst, wobei die Lastreduktion (222) dann vorgenommen wird, wenn die Verfügbarkeit der elektrischen Energie abnimmt und/oder ein Preis der elektrischen Energie über einen vorgegebenen Schwellwert steigt.

10. Verfahren (200) nach einem der vorstehenden Ansprüche, bei dem die Bereitstellung zumindest eines Teils der Aktivierungsenergie in dem Anfahrbetrieb (210) eine einstellbare Beheizung des Eduktgemischs (1) und/oder eines oder mehrerer Teilströme (1a, 1b) des Eduktgemischs (1) umfasst.

11. Verfahren (200) nach einem der vorstehenden Ansprüche, bei dem das Eduktgemisch (1) Wasserstoff enthält und das Verfahren zur Herstellung von Ammoniak, Methan oder Methanol als Verfahrensprodukt verwendet wird.

12. Anlage (100) zur Herstellung eines Verfahrensprodukts mit einem Reaktor (20) und einem oder mehreren Anfahrheizern (10), wobei die Anlage (100) dafür eingerichtet ist, ein Eduktgemisch (1) dem Reaktor (20) zuzuführen und in dem Reaktor (20) in einer exothermen Reaktion mit einer Aktivierungsenergie zu einem Rohgas (3) umzusetzen, einen Anfahrbetrieb (210) durchzuführen, in dem eine Bereitstellung zumindest eines Teils der Aktivierungsenergie unter Verwendung eines oder mehrerer Anfahrheizer (10) vorgenommen wird, und nach dem Anfahrbetrieb (210) einen Produktionsbetrieb (220) durchzuführen, in dem eine Bereitstellung zumindest eines Teil der Aktivierungsenergie unter Verwendung von Wärmeenergie vorgenommen wird, die bei der exothermen Reaktion erzeugt wird, **dadurch gekennzeichnet, dass** mindestens Anfahrheizer (10) ein als Wärmepuffer ausgeführt ist.

13. Anlage (100) nach Anspruch 12, die zur Durchführung eines Verfahrens nach einem der Ansprüche 1 bis 11 eingerichtet ist.
